# FASCICULE DE BREVET EUROPEEN

(11) **EP 2 790 910 B1**
(45) Date de publication et mention de la délivrance du brevet: **29.03.2017**
(21) Numéro de dépôt: 12809231.9
(22) Date de dépôt: 14.12.2012
(51) Int. Cl.: B29D 30/52, B60C 1/00, B60C 11/00

(54) **BANDAGE PNEUMATIQUE AVEC UNE BANDE DE ROULEMENT COMPORTANT UN FEUTRE IMPRÉGNÉ**
REIFEN MIT EINER LAUFFLÄCHE MIT IMPRÄGNIERTEM FILZ
TYRE HAVING A TREAD COMPRISING AN IMPREGNATED FELT

(30) Priorité: 16.12.2011 FR 1161754
(43) Date de publication de la demande: 22.10.2014
(73) Titulaire: Compagnie Générale des Etablissements Michelin, 63000 Clermont-Ferrand (FR); Michelin Recherche et Technique S.A., 1763 Granges-Paccot (CH)
(72) Inventeur: ABAD, Vincent, F-63040 Clermont-Ferrand Cedex 9 (FR); CUSTODERO, Emmanuel, F-63040 Clermont-Ferrand Cedex 9 (FR)
(74) Mandataire: Dequire, Philippe Jean-Marie Denis
(86) Numéro de dépôt international: PCT/EP2012/075631
(87) Numéro de publication internationale: WO 2013/087879

(56) Documents cités:
- EP-A1- 0 018 539
- EP-A1- 2 070 728
- DE-B- 1 196 363
- FR-A- 372 901
- FR-A- 528 503
- US-A- 5 975 173

## Description

La présente invention est relative aux bandages pneumatiques munis d'une bande de roulement.

Un objectif constant des manufacturiers de bandages pneumatiques est d'améliorer l'adhérence des pneumatiques sur sol mouillé sans dégrader les performances des pneumatiques telles que le comportement, la résistance à l'usure et la résistance au roulement.

Pour obtenir des performances satisfaisantes en roulage notamment sur chaussée mouillée, il est connu de pourvoir une bande de roulement d'un pneumatique avec une sculpture formée par des éléments de sculpture séparés les uns des autres par des découpures (rainures de largeur moyenne supérieure ou égale à 2 mm et/ou incisions de largeur moyenne inférieure à 2 mm, ces découpures étant obtenues par exemple par moulage. Les éléments de sculpture ainsi formés comprennent une face de contact destinée à venir en contact avec la chaussée pendant le roulage et des faces latérales délimitant également les découpures ; l'intersection de chaque face latérale avec la face de contact forme une arête facilitant le contact du pneumatique avec la chaussée et notamment lorsque celle-ci est mouillée. Plus généralement, on définit une arête comme la limite géométrique de contact d'un élément de sculpture avec le sol en roulage.

Par éléments de sculpture, on distingue des éléments ne faisant pas le tour complet du pneumatique (blocs) et des éléments faisant le tour complet (nervures). Par ailleurs, les éléments de sculpture peuvent comporter une ou plusieurs incisions pour former des arêtes supplémentaires, chaque incision pouvant ou non déboucher sur au moins une face latérale de l'élément de sculpture. Par définition, une incision est l'espace délimité par deux faces principales en vis-à-vis distantes l'une de l'autre d'une largeur inférieure à 2 mm.

Le document FR 528 503 divulgue un bandage pneumatique dont la bande de roulement comporte un feutre imprégné par une composition de caoutchouc. Le document DE 1196363 divulgue un bandage pneumatique dont la carcasse comporte un feutre de fibres textiles imprégné par un matériau élastomère. Le document EP 2 070 728 décrit l'utilisation d'une composition d'élastomère à base de diène mélangée avec des nano-fibres dans la bande de roulement d'un pneumatique. Le document FR 372 901 décrit l'utilisation d'un feutre comprenant des fibres végétales ou de soie, imprégné d'une dissolution de caoutchouc sulfuré dans la fabrication de bandages pneumatiques. Le document US 5 975 173 décrit l'utilisation d'une mousse comprenant une composition d'élastomère thermoplastique et des fibres courtes dans la bande de roulement d'un pneumatique.

### Description brève de l'invention

L'invention a pour objet un pneumatique caractérisé en ce qu'il comprend une bande de roulement comportant un feutre imprégné d'un matériau élastomère thermoplastique, l'élastomère thermoplastique étant un copolymère bloc comprenant au moins un bloc élastomère et au moins un bloc thermoplastique, et en ce que les fibres du feutre sont des fibres choisies dans le groupe des fibres textiles, des fibres minérales et leurs mélanges.

La demanderesse a découvert de façon très surprenante que la présence d'un tel feutre imprégné en contact avec un sol de roulement mouillé permet d'améliorer de façon sensible l'adhérence du bandage pneumatique sur ce sol mouillé. De plus, l'imprégnation du feutre par un tel élastomère thermoplastique à blocs est particulièrement aisée à l'état fondu.

Selon un premier mode de réalisation, le feutre imprégné peut constituer une partie des faces de contact des éléments de sculpture de la bande de roulement du bandage pneumatique.

Avantageusement, le feutre imprégné peut constituer la face de contact d'au moins une nervure circonférentielle de la bande de roulement.

Selon un autre mode de réalisation, le feutre imprégné constitue la face de contact d'au moins un ensemble d'éléments de sculpture disposés axialement.

Avantageusement, le feutre imprégné constitue l'ensemble de la bande de roulement du bandage pneumatique.

Selon un autre mode de réalisation, le feutre imprégné peut constituer une partie d'un élément de sculpture de la bande de roulement.

Cet élément de sculpture peut être une nervure circonférentielle ou un bloc.

Avantageusement, le feutre imprégné constitue une partie d'au moins un ensemble de blocs de la bande de roulement disposés axialement.

Avantageusement, la densité apparente du feutre avant imprégnation est supérieure à 0,10 et de préférence supérieure à 0,15 pour obtenir une raideur intrinsèque suffisante de l'assemblage tridimensionnel de fibres, cette densité apparente est aussi de préférence inférieure à 0,40 dans le cas de fibres textiles, pour permettre une imprégnation aisée de l'assemblage de fibres par le matériau élastomère.

L'imprégnation du feutre par le matériau élastomère peut être réalisée par calandrage à chaud ou par moulage / injection sur le feutre ou préférentiellement à l'état fondu.

L'utilisation d'un tel feutre imprégné d'un matériau élastomère à la surface de la bande de roulement d'un bandage pneumatique a l'avantage de permettre d'utiliser des matériaux élastomères de très faible rigidité et donc excellents pour l'adhérence sur sol mouillé, tout en conservant une raideur élevée des éléments de sculpture en raison de la raideur intrinsèque de l'assemblage tridimensionnel des fibres du feutre.

L'invention concerne plus particulièrement les bandages pneumatiques destinés à équiper des véhicules sans moteur tels que les bicyclettes, ou des véhicules à moteur de type tourisme, SUV ("Sport Utility Vehicles"), deux roues (notamment motos), avions, comme des véhicules industriels choisis parmi camionnettes, « poids-lourd » - c'est-à-dire métro, bus, engins de transport routier (camions, tracteurs, remorques), véhicules hors-la-route tels qu'engins agricoles ou de génie civil -, autres véhicules de transport ou de manutention.

### I. Description détaillée de l'invention

Dans la présente description, sauf indication expresse différente, tous les pourcentages (%) indiqués sont des % en masse.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

Par « pce », on entend : partie en poids pour cent parties d'élastomère.

On entend par l'expression composition « à base de », une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa fabrication et de sa réticulation ou vulcanisation.

### 1-1. Mesures et tests utilisés : mesure du coefficient de frottement

Les mesures de coefficient de frottement dynamique ont été réalisées selon une méthode identique à celle décrite par L. Busse, A. Le Gal, et M. Küppel (Modelling of Dry and Wet Friction of Silica Filled Elastomers on Self-Affine Road Surfaces, Elastomere Friction, 2010, 51, p. 8). Les éprouvettes sont réalisées par moulage suivi d'une vulcanisation d'un support caoutchouteux carré (50mmx50mm) de 6 mm d'épaisseur recouvert de feutre d'épaisseur 2 mm avant cuisson. Cette épaisseur varie pendant la cuisson et atteint à titre d'exemple 1,4 mm dans le cas du feutre PLB40 de la société Laoureux. Après fermeture du moule, celui-ci est placé dans une presse à plateaux chauffants à 150°C pendant 50 minutes à une pression de 16 bars. Le sol utilisé pour réaliser ces mesures est une carotte prélevée sur un sol routier réel en béton bitumineux de type BBTM (norme NF P 98-137). Pour éviter les phénomènes de démouillage et l'apparition de forces d'adhésion parasites entre le sol et le matériau, le système sol+éprouvette est immergé dans une solution aqueuse à 5% d'un agent tensio-actif (Sinnozon - numéro CAS : 25155-30-0). La température de la solution aqueuse est régulée à l'aide d'un bain thermostatique. L'éprouvette est soumise à un mouvement de glissement en translation parallèlement au plan du sol. La vitesse de glissement Vg est fixée à 0.03 m/sec. La contrainte normale appliquée σₙ est de 100 kPa. Ces conditions sont décrites ci-après par « conditions de sol mouillé ». On mesure en continu la contrainte tangentielle σₜ opposée au mouvement de l'éprouvette sur le sol. Le rapport entre la contrainte tangentielle σₜ et la contrainte normale σₙ donne le coefficient de frottement dynamique µ. Les valeurs indiquées dans le tableau ci-dessous sont les valeurs de coefficient de frottement dynamique, obtenues en régime permanent après stabilisation de la valeur de la contrainte tangentielle σₜ.

### 1-2. Feutre

Le bandage pneumatique selon l'invention a pour caractéristique essentielle de comporter une bande de roulement avec un feutre constitué de fibres choisies dans le groupe des fibres textiles, des fibres minérales et de leurs mélanges.

La présence de ce feutre permet d'améliorer de façon sensible l'adhérence du pneumatique sur un sol mouillé.

Dans ce qui suit, on entend par « feutre » ou « intissé » de fibres, tout produit manufacturé constitué d'un voile, d'une nappe ou d'un matelas de fibres, qu'elles soient réparties directionnellement ou par hasard, et dont les fibres sont enchevêtrées ou entremêlées tridimensionnellement

Les modes de fabrication de tels feutres sont bien connus, notamment par aiguilletage ou foulage.

Les fibres du feutre peuvent être choisies parmi des fibres textiles d'origine naturelle, par exemple, dans le groupe des fibres de soie, de coton, de bambou, de cellulose, de laine et de leurs mélanges.

Des exemples de feutres de laine sont les feutres « PLB » et « MLB » de la société Laoureux. Ces feutres sont commercialisés avec une densité apparente variable entre 0,20 et 0,44.

Les fibres du feutre peuvent aussi être choisies dans le groupe des fibres textiles synthétiques, par exemple de polyester, de polyamide, de carbone, d'aramide, de polyéthylène, de polypropylène, de polyacrylonitrile, de polyimide, de polysulfones, de polyéther sulfones, de polyuréthannes, d'alcool polyvinylique et leurs mélanges.

Les fibres de polyester du feutre peuvent avantageusement être choisies dans le groupe des fibres de polyéthylène téréphtalate (PET - Dacron Invista inc.), de polybutylène téréphtalate (PBT), de polyéthylène naphtalate (PEN) et de leurs mélanges.

A titre d'exemple de feutres constitués de fibres aramides, on peut citer les feutres réalisés avec des fibres de Nomex® (fibres méta-aramide : poly(m-phénylèneisophtalamide), de sigle MPD-I) de la société Du Pont de Nemours.

Les fibres du feutre peuvent encore être choisies dans le groupe des fibres minérales, par exemple des fibres de verre et de basalte.

Les feutres peuvent être indifféremment composés de plusieurs types de fibres d'un même groupe ou de groupes différents tels que précédemment décrits.

### 1-3. Feutre imprégné

Selon une caractéristique essentielle de l'invention, les feutres utilisés dans des cavités de la bande de roulement sont imprégnés d'un matériau élastomère thermoplastique, l'élastomère thermoplastique étant un copolymère bloc comprenant au moins un bloc élastomère et au moins un bloc thermoplastique.

### 1-3-A Élastomère thermoplastique

Les élastomères thermoplastiques (en abrégé « TPE ») ont une structure intermédiaire entre polymères thermoplastiques et élastomères. Ce sont des copolymères à blocs, constitués de blocs rigides, thermoplastiques, reliés par des blocs souples, élastomères.

L'élastomère thermoplastique utilisé pour la mise en oeuvre de l'invention est un copolymère à blocs dont la nature chimique des blocs thermoplastiques et des blocs élastomères peut varier.

### 1-3 -A-1 Structure du TPE

La masse moléculaire moyenne en nombre (notée Mn) du TPE est préférentiellement comprise entre 30 000 et 500 000 g/mol, plus préférentiellement comprise entre 40 000 et 400 000 g/mol. En dessous des minima indiqués, la cohésion entre les chaînes d'élastomère du TPE, notamment en raison de sa dilution éventuelle (en présence d'une huile d'extension), risque d'être affectée ; d'autre part, une augmentation de la température d'usage risque d'affecter les propriétés mécaniques, notamment les propriétés à la rupture, avec pour conséquence une performance diminuée "à chaud". Par ailleurs, une masse Mn trop élevée peut être pénalisante pour la mise en oeuvre. Ainsi, on a constaté qu'une valeur comprise dans un domaine de 50 000 à 300 000 g/mol était particulièrement bien adaptée, notamment à une utilisation du TPE dans une composition pour bande de roulement de pneumatique.

La masse moléculaire moyenne en nombre (Mn) de l'élastomère TPE est déterminée de manière connue, par chromatographie d'exclusion stérique (SEC). Par exemple dans le cas des élastomères thermoplastiques styréniques, l'échantillon est préalablement solubilisé dans du tétrahydrofuranne à une concentration d'environ 1 g/1; puis la solution est filtrée sur filtre de porosité 0,45 um avant injection. L'appareillage utilisé est une chaîne chromatographique « WATERS alliance ». Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales « STYRAGEL » (« HMW7 », « HMW6E » et deux « HT6E »). Le volume injecté de la solution de l'échantillon de polymère est de 100 uᵢ Le détecteur est un réfractomètre différentiel « WATERS 2410 » et son logiciel associé d'exploitation des données chromatographiques est le système « WATERS MILLENIUM ». Les masses molaires moyennes calculées sont relatives à une courbe d'étalonnage réalisée avec des étalons de polystyrène. Les conditions sont adaptables par l'homme du métier.

La valeur de l'indice de polydispersité Ip (rappel : Ip = Mw/Mn avec Mw masse moléculaire moyenne en poids et Mn masse moléculaire moyenne en nombre) du TPE est de préférence inférieure à 3 ; plus préférentiellement inférieure à 2 et encore plus préférentiellement inférieure à 1,5.

Dans la présente demande, lorsqu'il est fait référence à la température de transition vitreuse du TPE, il s'agit de la Tg relative au bloc élastomère. Le TPE présente préférentiellement une température de transition vitreuse ("Tg") qui est préférentiellement inférieure ou égale à 25°C, plus préférentiellement inférieure ou égale à 10°C. Une valeur de Tg supérieure à ces minima peut diminuer les performances de la bande de roulement lors d'une utilisation à très basse température ; pour une telle utilisation, la Tg du TPE est plus préférentiellement encore inférieure ou égale à -10°C. De manière préférentielle également, la Tg du TPE est supérieure à -100°C.

De manière connue, les TPE présentent deux pics de température de transition vitreuse (Tg, mesurée selon ASTM D3418), la température la plus basse étant relative à la partie élastomère du TPE, et la température la plus haute étant relative à la partie thermoplastique du TPE. Ainsi, les blocs souples des TPE se définissent par une Tg inférieure à la température ambiante (25°C), tandis que les blocs rigides ont une Tg supérieure.

Pour être de nature à la fois élastomère et thermoplastique, le TPE doit être muni de blocs suffisamment incompatibles (c'est-à-dire différents du fait de leur masse, de leur polarité ou de leur Tg respectives) pour conserver leurs propriétés propres de bloc élastomère ou thermoplastique.

Les TPE peuvent être des copolymères avec un petit nombre de blocs (moins de 5, typiquement 2 ou 3), auquel cas ces blocs ont de préférence des masses élevées, supérieures à 15000 g/mol. Ces TPE peuvent être par exemple des copolymères diblocs, comprenant un bloc thermoplastique et un bloc élastomère. Ce sont souvent aussi des élastomères triblocs avec deux segments rigides reliés par un segment souple. Les segments rigides et souples peuvent être disposés linéairement, en étoile ou branchés. Typiquement, chacun de ces segments ou blocs contient souvent au minimum plus de 5, généralement plus de 10 unités de base (par exemple unités styrène et unités butadiène pour un copolymère blocs styrène/ butadiène/ styrène).

Les TPE peuvent aussi comprendre un grand nombre de blocs (plus de 30, typiquement de 50 à 500) plus petits, auquel cas ces blocs ont de préférence des masses peu élevées, par exemple de 500 à 5000 g/mol, ces TPE seront appelés TPE multiblocs par la suite, et sont un enchaînement blocs élastomères - blocs thermoplastiques.

Selon une première variante, le TPE se présente sous une forme linéaire. Par exemple, le TPE est un copolymère dibloc : bloc thermoplastique / bloc élastomère. Le TPE peut aussi être un copolymère tribloc : bloc thermoplastique / bloc élastomère / bloc thermoplastique, c'est-à-dire un bloc élastomère central et de deux blocs thermoplastiques terminaux, à chacune des deux extrémités du bloc élastomère. Également, le TPE multibloc peut être un enchaînement linéaire de blocs élastomères - blocs thermoplastiques.

Selon une autre variante de l'invention, le TPE utile pour les besoins de l'invention se présente sous une forme étoilée à au moins trois branches. Par exemple, le TPE peut alors se composer d'un bloc élastomère étoilé à au moins trois branches et d'un bloc thermoplastique, situé à l'extrémité de chacune des branches du bloc élastomère. Le nombre de branches de l'élastomère central peut varier, par exemple de 3 à 12, et de préférence de 3 à 6.

Selon une autre variante de l'invention, le TPE se présente sous une forme branchée ou dendrimère. Le TPE peut alors se composer d'un bloc élastomère branché ou dendrimère et d'un bloc thermoplastique, situé à l'extrémité des branches du bloc élastomère dendrimère.

### 1-3-A-2 Nature des blocs élastomères

Les blocs élastomères du TPE pour les besoins de l'invention, peuvent être tous les élastomères connus de l'homme de l'art. Ils possèdent de préférence une Tg inférieure à 25°C, préférentiellement inférieure à 10°C, plus préférentiellement inférieure à 0°C et très préférentiellement inférieure à -10°C. De manière préférentielle également, la Tg bloc élastomère du TPE est supérieure à -100°C.

Pour les blocs élastomères à chaîne carbonée, si la partie élastomère du TPE ne comporte pas d'insaturation éthylénique, on parlera d'un bloc élastomère saturé. Si le bloc élastomère du TPE comporte des insaturations éthyléniques (c'est-à-dire des doubles liaisons carbone - carbone), on parlera alors d'un bloc élastomère insaturé ou diénique.

Un bloc élastomère saturé est constitué d'une séquence de polymère obtenu par la polymérisation d'au moins un (c'est-à-dire un ou plusieurs) monomère éthylénique, c'est-à-dire comportant une double liaison carbone - carbone. Parmi les blocs issus de ces monomères éthyléniques, on peut citer les blocs polyalkylènes tels que les copolymères statistiques éthylène - propylène ou éthylène - butylène. Ces blocs élastomères saturés peuvent aussi être obtenus par hydrogénation de blocs élastomères insaturés. Il peut aussi s'agir de blocs aliphatiques issus de la famille des polyéthers, des polyesters, ou des polycarbonates.

Dans le cas des blocs élastomères saturés, ce bloc élastomère du TPE est de préférence composé majoritairement d'unités éthyléniques. Par majoritairement, on entend un taux pondéral en monomère éthylénique le plus élevé par rapport au poids total du bloc élastomère, et de préférence un taux pondéral de plus de 50%, plus préférentiellement de plus de 75% et encore plus préférentiellement de plus de 85%.

Des diènes conjugués en C₄ - C₁₄ peuvent être copolymérisés avec les monomères éthyléniques. Il s'agit dans ce cas de copolymères statistiques. De préférence, ces diènes conjugués sont choisis parmi l'isoprène, le butadiène, le 1-méthylbutadiène, le 2- méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 1,3-hexadiène, le 2-méthyl-1,3-hexadiène, le 3-méthyl-1,3-hexadiène, le 4-méthyl-1,3-hexadiène, le 5-méthyl-1,3-hexadiène, le 2,3-diméthyl-1,3-hexadiène, le 2,4-diméthyl-1,3-hexadiène, le 2,5-diméthyl-1,3-hexadiène, le 2-neopentylbutadiène, le 1,3-cyclopentadiène, le 1,3-cyclohexadiène, 1-vinyl-1,3-cyclohexadiène ou leur mélange. Plus préférentiellement le diène conjugué est l'isoprène ou un mélange contenant de l'isoprène.

Dans le cas des blocs élastomères insaturés, ce bloc élastomère du TPE est de préférence composé majoritairement d'une partie élastomère diénique. Par majoritairement, on entend un taux pondéral en monomère diénique le plus élevé par rapport au poids total du bloc élastomère, et de préférence un taux pondéral de plus de 50%, plus préférentiellement de plus de 75% et encore plus préférentiellement de plus de 85%. Alternativement, l'insaturation du bloc élastomère insaturé peut provenir d'un monomère comportant une double liaison et une insaturation de type cyclique, c'est le cas par exemple dans le polynorbornène.

Préférentiellement, des diènes conjugués en C₄ - C₁₄ peuvent être polymérisés ou copolymérisés pour constituer un bloc élastomère diénique. De préférence, ces diènes conjugués sont choisis parmi l'isoprène, le butadiène, le pipérylène, le 1-méthylbutadiène, le 2-méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 2,5-diméthyl-1,3-pentadiène, le 2-méthyl-1,4-pentadiène, le 1,3-hexadiène, le 2-méthyl-1,3-hexadiène, le 2-méthyl-1,5-hexadiène, le 3-méthyl-1,3-hexadiène, le 4-méthyl-1,3-hexadiène, le 5-méthyl-1,3-hexadiène, le 2,5-diméthyl-1,3-hexadiène, le 2,5-diméthyl-2,4-hexadiène, le 2-néopentyl-1,3-butadiène, le 1,3-cyclopentadiène, le méthylcyclopentadiène, le 2-méthyl-1,6-heptadiène, le 1,3-cyclohexadiène, 1-vinyl-1,3-cyclohexadiène ou leur mélange. Plus préférentiellement le diène conjugué est l'isoprène ou le butadiène ou un mélange contenant de l'isoprène et/ou du butadiène.

Selon une variante, les monomères polymérisés pour former la partie élastomère du TPE peuvent être copolymérisés, de manière statistique, avec au moins un autre monomère de manière à former un bloc élastomère. Selon cette variante, la fraction molaire en monomère polymérisé autre qu'un monomère éthylénique, par rapport au nombre total de motifs du bloc élastomère, doit être telle que ce bloc garde ses propriétés d'élastomère. Avantageusement la fraction molaire de cet autre co-monomère peut aller de 0 à 50%, plus préférentiellement de 0 à 45% et encore plus préférentiellement de 0 à 40%.

A titre d'illustration, cet autre monomère susceptible de copolymériser avec le monomère premier peut être choisi parmi les monomères éthyléniques tels que définis précédemment (par exemple l'éthylène), les monomères diènes, plus particulièrement, les monomères diènes conjugués ayant 4 à 14 atomes de carbone tels que définis précédemment (par exemple le butadiène), les monomères de type vinylaromatiques ayant de 8 à 20 atomes de carbone tels que définis ci-après ou encore, il peut s'agir d'un monomère tel que l'acétate de vinyle.

Lorsque le co-monomère est de type vinylaromatique, il représente avantageusement une fraction en motifs sur le nombre total de motifs du bloc thermoplastique de 0 à 50%, préférentiellement allant de 0 à 45% et encore plus préférentiellement allant de 0 à 40%. A titre de composés vinylaromatiques conviennent notamment les monomères styréniques cités plus haut, à savoir les méthylstyrènes, le para-tertio-butylstyrène, les chlorostyrènes, les bromostyrènes, les fluorostyrènes ou encore le para-hydroxy-styrène. De préférence, le co-monomère de type vinylaromatique est le styrène.

Selon un mode de réalisation préférentiel de l'invention, les blocs élastomères du TPE présentent au total, une masse moléculaire moyenne en nombre ("Mn") allant de 25 000 g/mol à 350 000g/mol, de préférence de 35 000 g/mol à 250 000 g/mol de manière à conférer au TPE de bonnes propriétés élastomériques et une tenue mécanique suffisante et compatible avec l'utilisation en bande de roulement de pneumatique.

Le bloc élastomère peut également être un bloc comprenant plusieurs types de monomères éthyléniques, diéniques ou styréniques tels que définis ci-dessus.

Le bloc élastomère peut également être constitué de plusieurs blocs élastomères tels que définis ci-dessus.

### I-3-A-3 Nature des blocs thermoplastiques

On utilisera pour la définition des blocs thermoplastiques la caractéristique de température de transition vitreuse (Tg) du bloc rigide thermoplastique. Cette caractéristique est bien connue de l'homme du métier. Elle permet notamment de choisir la température de mise en oeuvre industrielle (transformation). Dans le cas d'un polymère (ou d'un bloc de polymère) amorphe, la température de mise en oeuvre est choisie sensiblement supérieure à la Tg. Dans le cas spécifique d'un polymère (ou d'un bloc de polymère) semi-cristallin, on peut observer une température de fusion alors supérieure à la température de transition vitreuse. Dans ce cas, c'est plutôt la température de fusion (Tf) qui permet de choisir la température de mise en oeuvre du polymère (ou bloc de polymère) considéré. Ainsi, par la suite, lorsqu'on parlera de « Tg (ou Tf, le cas échéant) », il faudra considérer qu'il s'agit de la température utilisée pour choisir la température de mise oeuvre.

Pour les besoins de l'invention, les élastomères TPE comprennent un ou plusieurs bloc(s) thermoplastique(s) ayant de préférence une Tg (ou Tf, le cas échéant) supérieure ou égale à 80°C et constitué(s) à partir de monomères polymérisés. Préférentiellement, ce bloc thermoplastique a une Tg (ou Tf, le cas échéant) comprise dans un domaine variant de 80°C à 250°C. De préférence, la Tg (ou Tf, le cas échéant) de ce bloc thermoplastique est préférentiellement de 80°C à 200°C, plus préférentiellement de 80°C à 180°C.

La proportion des blocs thermoplastiques par rapport au TPE, tel que défini pour la mise en oeuvre de l'invention, est déterminée d'une part par les propriétés de thermoplasticité que doit présenter ledit copolymère. Les blocs thermoplastiques ayant une Tg (ou Tf, le cas échéant) supérieure ou égale à 80°C sont préférentiellement présents dans des proportions suffisantes pour préserver le caractère thermoplastique de l'élastomère selon l'invention. Le taux minimum de blocs thermoplastiques ayant une Tg (ou Tf, le cas échéant) supérieure ou égale à 80°C dans le TPE peut varier en fonction des conditions d'utilisation du copolymère. D'autre part, la capacité du TPE à se déformer lors de la préparation du pneu peut également contribuer à déterminer la proportion des blocs thermoplastiques ayant une Tg (ou Tf, le cas échéant) supérieure ou égale à 80°C.

Les blocs thermoplastiques ayant une Tg (ou Tf, le cas échéant) supérieure ou égale à 80°C peuvent être constitués à partir de monomères polymérisés de diverse nature, notamment, ils peuvent constituer les blocs suivants ou leurs mélanges :
- les polyoléfines (polyéthylène, polypropylène)
- les polyuréthannes ;
- les polyamides ;
- les polyesters ;
- les polyacétals ;
- les polyéthers (polyoxyde d'éthylène, polyphénylène éther) ;
- les polysulfures de phénylène ;
- les polyfluorés (FEP, PFA, ETFE) ;
- les polystyrènes (détaillés ci-dessous) ;
- les polycarbonates ;
- les polysulfones ;
- le polyméthylméthacrylate
- le polyétherimide
- les copolymères thermoplastiques tels que le copolymère acrylonitrile-butadiène-styrène (ABS).

Les blocs thermoplastiques ayant une Tg (ou Tf, le cas échéant) supérieure ou égale à 80°C peuvent aussi être obtenus à partir de monomères choisis parmi les composés suivants et leurs mélanges :
- l'acénaphthylène : l'homme de l'art pourra par exemple se référer à l'article de Z. Fodor et J.P. Kennedy, Polymer Bulletin 1992 29(6) 697-705 ;
- l'indène et ses dérivés tels que par exemple le 2-méthylindène, le 3-méthylindène, le 4-méthylindène, les diméthyl-indène, le 2-phénylindène, le 3-phénylindène et le 4-phénylindène ; l'homme de l'art pourra par exemple se référer au document de brevet US4946899, par les inventeurs Kennedy, Puskas, Kaszas et Hager et aux documents J. E. Puskas, G. Kaszas, J.P. Kennedy, W.G. Hager Journal of Polymer Science Part A : Polymer Chemistry (1992) 30, 41 et J.P. Kennedy, N. Meguriya, B. Keszler, Macromolecules (1991) 24(25), 6572-6577 ;
- l'isoprène, conduisant alors à la formation d'un certain nombre d'unités polyisoprène 1,4-trans et d'unités cyclisées selon un processus intramoléculaire ; l'homme de l'art pourra par exemple se référer aux documents G. Kaszas, J.E. Puskas, .P. Kennedy Applied Polymer Science (1990) 39(1) 119-144 et J.E. Puskas, G. Kaszas, J.P. Kennedy, Macromolecular Science, Chemistry A28 (1991) 65-80.

Les polystyrènes sont obtenus à partir de monomères styréniques. Par monomère styrénique doit être entendu dans la présente description tout monomère comprenant du styrène, non substitué comme substitué ; parmi les styrènes substitués peuvent être cités par exemple les méthylstyrènes (par exemple l'o-méthylstyrène, le m-méthylstyrène ou le p-méthylstyrène, l'alpha-méthylstyrène, l'alpha-2-diméthylstyrène, l'alpha-4-diméthylstyrène ou le diphényléthylène), le para-tertio-butylstyrène, les chlorostyrènes (par exemple l'o-chlorostyrène, le m-chlorostyrène, le p-chlorostyrène, le 2,4-dichlorostyrène, le 2,6-dichlorostyrène ou le 2,4,6-trichlorostyrène), les bromostyrènes (par exemple l'o-bromostyrène, le m-bromostyrène, le p-bromostyrène, le 2,4-dibromostyrène, le 2,6-dibromostyrène ou les 2,4,6-tribromostyrène), les fluorostyrènes (par exemple l'o-fluorostyrène, le m-fluorostyrène, le p-fluorostyrène, le 2,4-difluorostyrène, le 2,6-difluorostyrène ou les 2,4,6-trifluorostyrène) ou encore le para-hydroxy-styrène.

Selon un mode de réalisation préférentiel de l'invention, le taux pondéral de styrène, dans l'élastomère TPE, est compris entre 5% et 50%. En dessous du minimum indiqué, le caractère thermoplastique de l'élastomère risque de diminuer de manière sensible tandis qu'au-dessus du maximum préconisé, l'élasticité de la bande de roulement peut être affectée. Pour ces raisons, le taux de styrène est plus préférentiellement compris entre 10% et 40%.

Selon une variante de l'invention, le monomère polymérisé tel que défini ci-dessus peut être copolymérisé avec au moins un autre monomère de manière à former un bloc thermoplastique ayant une Tg (ou Tf, le cas échéant) telle que définie ci-dessus.

A titre d'illustration, cet autre monomère susceptible de copolymériser avec le monomère polymérisé, peut être choisi parmi les monomères diènes, plus particulièrement, les monomères diènes conjugués ayant 4 à 14 atomes de carbone, et les monomères de type vinylaromatiques ayant de 8 à 20 atomes de carbone, tels qu'ils sont définis dans la partie concernant le bloc élastomère.

Selon l'invention, les blocs thermoplastiques du TPE présentent au total, une masse moléculaire moyenne en nombre ("Mn") allant de 5 000 g/mol à 150 0000g/mol, de manière à conférer au TPE de bonnes propriétés élastomériques et une tenue mécanique suffisante et compatible avec l'utilisation en bande de roulement de pneumatique.

Le bloc thermoplastique peut également être constitué de plusieurs blocs thermoplastiques tels que définis ci-dessus.

### I-3-A-4 Exemples de TPE

Par exemple, le TPE est un copolymère dont la partie élastomère est saturée, et comportant des blocs styrènes et des blocs alkylènes. Les blocs alkylènes sont préférentiellement de l'éthylène, du propylène ou du butylène. Plus préférentiellement, cet élastomère TPE est choisi dans le groupe suivant, constitué de copolymères diblocs, triblocs linéaires ou étoilés : styrène/ éthylène/ butylène (SEB), styrène/ éthylène/ propylène (SEP), styrène/ éthylène/ éthylène/ propylène (SEEP), styrène/ éthylène/ butylène/ styrène (SEBS), styrène/ éthylène/ propylène/ styrène (SEPS), styrène/ éthylène/ éthylène/ propylène/ styrène (SEEPS), styrène/ isobutylène (SIB), styrène/ isobutylène/ styrène (SIBS) et les mélanges de ces copolymères.

Selon un autre exemple, le TPE est un copolymère dont la partie élastomère est insaturée, et qui comporte des blocs styrènes et des blocs diènes, ces blocs diènes étant en particulier des blocs isoprène ou butadiène. Plus préférentiellement, cet élastomère TPE est choisi dans le groupe suivant, constitué de copolymères diblocs, triblocs linéaires ou étoilés : styrène/ butadiène (SB), styrène/ isoprène (SI), styrène/ butadiène/ isoprène (SBI), styrène/ butadiène/ styrène (SBS), styrène/ isoprène/ styrène (SIS), styrène/ butadiène/ isoprène/ styrène (SBIS) et les mélanges de ces copolymères.

Par exemple également, le TPE est un copolymère linéaire ou étoilé dont la partie élastomère comporte une partie saturée et une partie insaturée comme par exemple le styrène/ butadiène/ butylène (SBB), le styrène/ butadiène/ butylène/ styrène (SBBS) ou un mélange de ces copolymères.

Parmi les TPE multiblocs, on peut citer les copolymères comportant des blocs copolymère statistique d'éthylène et de propylène/ polypropylène, polybutadiène/ polyuréthane (TPU), polyéther/ polyester (COPE), polyéther/ polyamide (PEBA).

Il est également possible que les TPE donnés en exemple ci-dessus soient mélangés entre eux au sein de la bande de roulement selon l'invention.

A titre d'exemples d'élastomères TPE commercialement disponibles, on peut citer les élastomères de type SEPS, SEEPS, ou SEBS commercialisés par la société Kraton sous la dénomination "Kraton G" (e.g. produits G1650, G1651, G1654, G1730) ou la société Kuraray sous la dénomination "Septon" (e.g. « Septon 2007 », « Septon 4033 », « Septon 8004 ») ; ou les élastomères de type SIS commercialisés par Kuraray, sous le nom « Hybrar 5125 », ou commercialisés par Kraton sous le nom de « D1161 » ou encore les élastomères de type SBS linéaire commercialisé par Polimeri Europa sous la dénomination « Europrene SOL T 166 » ou SBS étoilé commercialisés par Kraton sous la dénomination « D1184 ». On peut également citer les élastomères commercialisés par la société Dexco Polymers sous la dénomination de « Vector » (e.g. « Vector 4114 », « Vector 8508 »). Parmi les TPE multiblocs, on peut citer le TPE « Vistamaxx » commercialisé par la société Exxon ; le TPE COPE commercialisé par la société DSM sous le dénomination « Arnitel », ou par la société Dupont sous le dénomination « Hytrel », ou par la société Ticona sous le dénomination « Riteflex » ; le TPE PEBA commercialisé par la société Arkema sous le dénomination « PEBAX » ; le TPE TPU commercialisé par la société Sartomer sous le dénomination « TPU 7840 », ou par la société BASF sous le dénomination « Elastogran ».

### I-3-A-5 Quantité de TPE

Si d'éventuels autres élastomères (non thermoplastiques) sont utilisés dans la composition thermoplastique élastomère, le ou les élastomères TPE constituent la fraction majoritaire en poids. Ainsi, la quantité d'élastomère TPE est comprise dans un domaine qui varie de 65 à 100 pce, préférentiellement de 70 à 100 pce. Il est bien entendu que la somme des quantités des élastomères TPE et diéniques est toujours 100 pce.

Le ou les élastomères TPE sont préférentiellement le ou les seuls élastomères de la bande de roulement.

### I-3-B Autres éléments de la composition

La composition peut aussi comporter des charges ou des additifs divers tels que des charges renforçantes nanométriques ou non renforçantes.

La composition du matériau élastomère peut comporter également tout ou partie des additifs usuels habituellement utilisés dans les compositions d'élastomères destinées à la fabrication de pneumatiques, comme par exemple des pigments, des agents de protection tels que cires anti-ozone, anti-ozonants chimiques, anti-oxydants, des agents anti-fatigue, des résines renforçantes, des accepteurs (par exemple résine phénolique novolaque) ou des donneurs de méthylène (par exemple HMT ou H3M) tels que décrits par exemple dans la demande WO 02/10269, un système de réticulation à base soit de soufre, soit de donneurs de soufre et/ou de peroxyde et/ou de bismaléimides, des accélérateurs de vulcanisation, des activateurs de vulcanisation.

La formulation du matériau élastomère peut également contenir, en complément des agents de couplage, des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

Le matériau élastomère peut également comporter, à titre d'agent plastifiant préférentiel non aromatique ou très faiblement aromatique, au moins un composé choisi dans le groupe constitué par les huiles naphténiques, paraffiniques, huiles MES, huiles TDAE, les plastifiants esters (par exemple les trioléates de glycérol), les résines hydrocarbonées présentant une haute Tg, de préférence supérieure à 30 °C, telles que décrites par exemple dans les demandes WO 2005/087859, WO 2006/061064 et WO 2007/017060, et les mélanges de tels composés. Le taux global d'un tel agent plastifiant préférentiel est de préférence compris entre 10 et 100 pce, plus préférentiellement compris entre 20 et 80 pce, notamment dans un domaine de 10 à 50 pce.

Parmi les résines plastifiantes hydrocarbonées ci-dessus (on rappelle que l'appellation « résine » est réservée par définition à un composé solide), on citera notamment les résines d'homo- ou copolymères d'alphapinène, betapinène, dipentène ou polylimonène, coupe C5, par exemple de copolymère coupe C5/styrène ou de copolymère coupe C5/coupe C9, utilisables seules ou en combinaison avec des huiles plastifiantes comme par exemple des huiles MES ou TDAE.

### I-3-C Préparation

Les élastomères TPE peuvent être mis en oeuvre de façon classique pour des TPE, par extrusion ou moulage, par exemple à partir d'une matière première disponible sous la forme de billes ou de granulés.

Le matériau élastomère à base d'un élastomère thermoplastique selon l'invention est préparé de façon classique, par exemple, par incorporation des différents composants dans une extrudeuse bi-vis, de façon à réaliser la fusion de la matrice et une incorporation de tous les ingrédients, puis utilisation d'une filière permettant de réaliser le profilé. L'imprégnation du feutre par le matériau élastomère s'effectue ensuite comme précédemment indiqué par calandrage à chaud ou injection sous pression. Cette imprégnation est particulièrement aisée à réaliser compte tenu du caractère thermoplastique de ce matériau élastomère.

Si le bloc élastomère du TPE est un bloc élastomère saturé, il pourra être nécessaire d'inclure entre le feutre imprégné et la paroi de la cavité de la bande de roulement un film ou couche ou couche d'adhésion qui contiendra un TPE à bloc élastomère insaturé pour favoriser l'adhésion entre ledit feutre imprégné et la couche adjacente de la bande de roulement au sein du pneumatique fini.

### Description des figures

Les figures annexées illustrent des modes de réalisation d'une bande de roulement de bandage pneumatique incorporant un feutre imprégné :
- la figure 1 présente un premier mode de réalisation d'une bande de roulement d'un bandage pneumatique incorporant un feutre imprégné ; et
- la figure 2 présente un second mode de réalisation d'une bande de roulement d'un bandage pneumatique incorporant un feutre imprégné ;
- la figure 3 présente un troisième mode de réalisation d'une bande de roulement d'un bandage pneumatique incorporant un feutre imprégné ;
- la figure 4 présente un quatrième mode de réalisation d'une bande de roulement d'un bandage pneumatique incorporant un feutre imprégné ;
- la figure 5 présente, en vue de dessus et de façon très schématique, une partie de bande de roulement dont plusieurs blocs incorporent un feutre imprégné.

### Exemples de réalisation de l'invention

Sur les figures, on a représenté des axes X, Y, Z orthogonaux entre eux correspondant aux orientations habituelles circonférentielle (X), axiale (Y) et radiale (Z) d'un pneumatique.

On entend par « orientation sensiblement circonférentielle » une orientation moyenne ne s'écartant pas de plus de cinq degrés de la direction circonférentielle X.

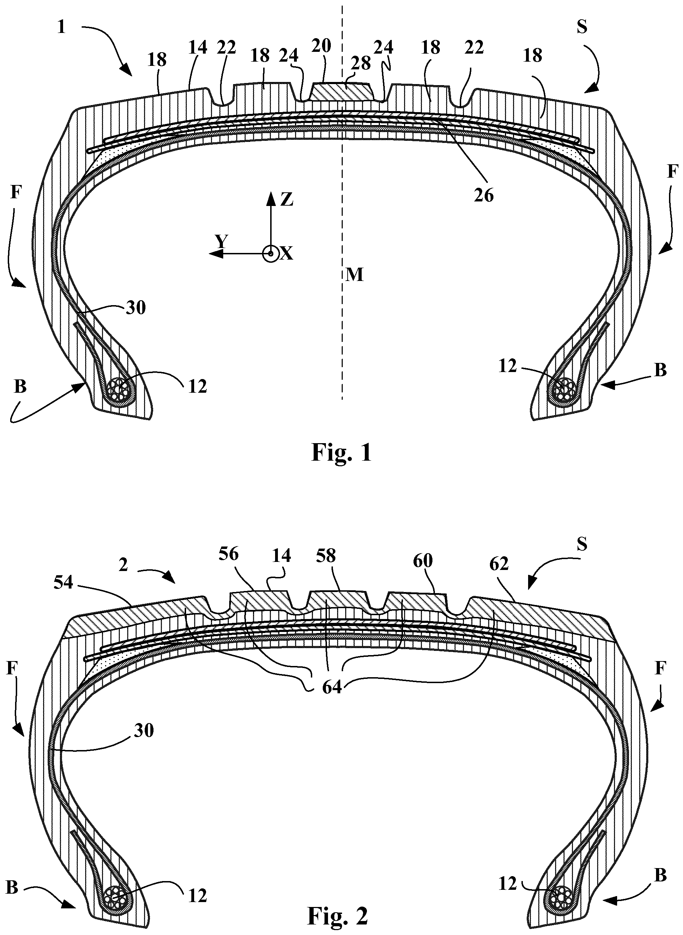

On a représenté à la figure 1 un pneumatique selon un mode de réalisation de l'invention désigné par la référence générale 1. De façon classique, le pneumatique 10 comprend un sommet S prolongé par deux flancs F et deux bourrelets B.

Deux tringles 12 sont noyées dans les bourrelets B. Les deux tringles 12 sont agencées symétriquement par rapport à un plan radial médian M du pneumatique.

Chaque tringle 12 est de révolution autour d'un axe de référence. Cet axe de référence, sensiblement parallèle à la direction Y, est sensiblement confondu avec un axe de révolution du pneumatique.

Le pneumatique 1 comprend également une armature de carcasse 30 dont les extrémités sont enroulées autour des tringles 12. L'armature de carcasse dans l'exemple représenté comprend une ou plusieurs nappes de renforts textiles orientés sensiblement radialement.

Le sommet S comprend une bande de roulement 14, munie de sculptures 18 et 20, séparées par des découpures ou rainures 22 et 24, ainsi qu'une armature de sommet 26 usuelle. Les deux rainures 24 entourent la sculpture centrale 20 qui est une nervure circonférentielle.

La partie radialement extérieure et la face de contact de la nervure circonférentielle 20 sont constituées par un feutre imprégné 28 qui s'étend circonférentiellement sur toute la périphérie de la bande de roulement du bandage pneumatique.

La figure 2 présente une coupe axiale d'un bandage pneumatique 2 similaire à celui de la figure 1 selon un autre mode de réalisation de l'invention. Dans cette coupe axiale, l'ensemble des éléments de sculptures ou blocs 54, 56, 58, 60, 62 de la bande de roulement 14 du bandage pneumatique est constitué par un feutre imprégné 64. Ce feutre imprégné s'étend axialement et circonférentiellement sur l'ensemble du sommet du bandage pneumatique. Une sous-couche caoutchouteuse (non représentée) peut être disposée entre le feutre imprégné et l'armature de sommet.

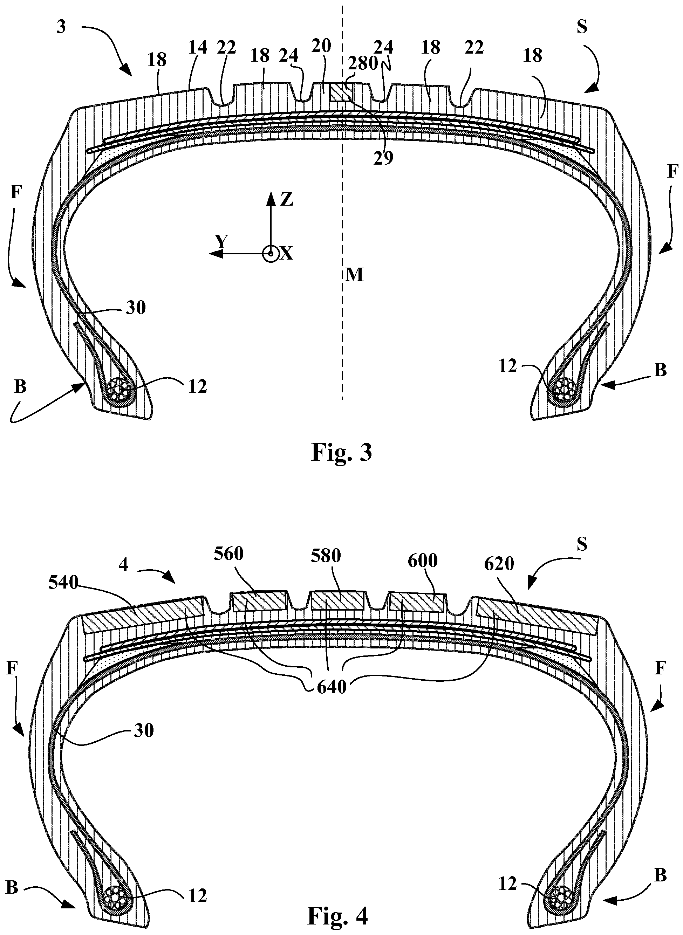

La figure 3 présente une coupe axiale d'un bandage pneumatique 3 similaire à celui de la figure 1 selon un autre mode de réalisation de l'invention. Dans ce mode de réalisation, une cavité 29 est remplie par un feutre imprégné 280. La cavité 29 s'étend circonférentiellement de façon continue ou non.

La figure 4 présente une coupe axiale d'un bandage pneumatique 4 similaire à celui de la figure 2 selon un autre mode de réalisation de l'invention. La bande de roulement de ce pneumatique 4 comporte une pluralité de cavités 540, 560, 580 ; 600 et 620 disposées dans des blocs placés axialement les uns par rapport aux autres. Chaque cavité est remplie par un feutre imprégné 640. Les cavités d'étendent circonférentiellement sur une distance comprise entre 5 et 30 mm. Le nombre de cavités dans la direction circonférentielle est de l'ordre de 10 à 20. Ce nombre est tel que dans des conditions usuelles de roulage, au moins un ensemble axial de blocs comportant des cavités avec des feutres imprégnés se trouve en permanence dans l'aire de contact.

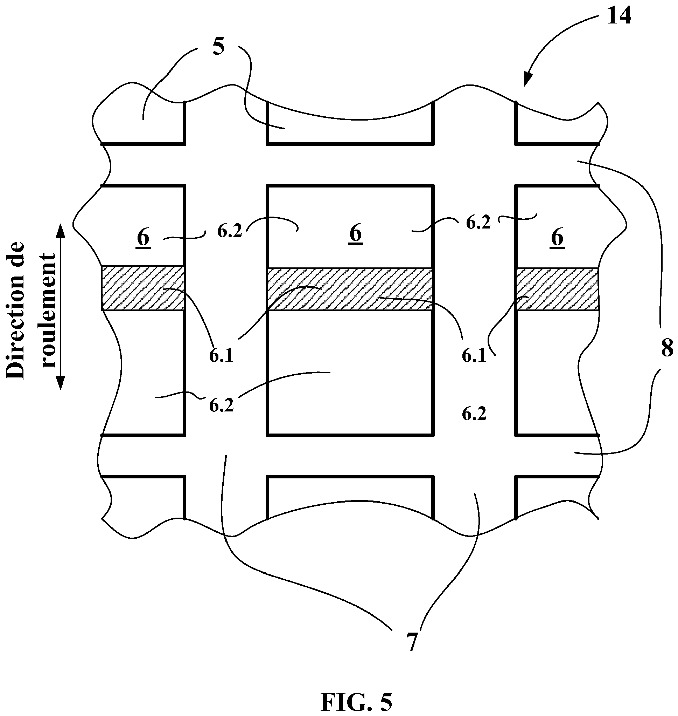

La figure 5 est une vue de dessus partielle et très schématique d'une bande de roulement selon un mode de réalisation proche de celui de la figure 4. La bande de roulement 14 comporte une surface de roulement 5 et un ensemble de blocs 6 délimités par des rainures circonférentielles 7 et axiales 8. Les blocs 6 comportent un feutre imprégné 6.2 disposé entre deux parties caoutchouteuses 6.1. Dans ce mode de réalisation et contrairement au mode de réalisation illustré à la figure 4, les feutres imprégnés 6.2 constituent une partie des faces latérales des blocs 6.

Les ébauches de ces bandages pneumatiques sont réalisées de façon usuelle par empilage successif des différents éléments du bandage. Après leur imprégnation par le matériau élastomère choisi, les bandes de feutre imprégnées peuvent être disposées circonférentiellement ou axialement ou encore dans des cavités. Puis on met en place l'ébauche dans le moule de vulcanisation et l'on effectue classiquement le moulage de la bande de roulement lors de la fermeture du moule suivi de la vulcanisation de l'ébauche.

### I-4. Essais

Le coefficient de frottement dynamique d'éprouvettes constituées d'une part d'un mélange usuel de bande de roulement de bandage pneumatique et d'autre part de feutre de laine imprégné d'un élastomère thermoplastique, a été déterminé dans les conditions précédemment décrites. Les résultats présentés ci-dessous sont présentés en base 100 : une valeur arbitraire de 100 est donnée pour le coefficient de frottement du témoin, un résultat supérieur à 100 indiquant une meilleure performance en adhérence.

La composition du mélange témoin de bande de roulement (A-1) est présentée dans le tableau 1 ci-dessous ainsi que la composition de thermoplastique élastomère imprégnant le feutre de laine MLB25 de la société Laoureux (A-2).

**Tableau 1**

| Composition | A-1 (pce) | A-2 (pce) |
|---|---|---|
| SBR (1) | 40 | 0 |
| SBR (2) | 60 | 0 |
| Élastomère TPE (3) | 0 | 100 |
| silice (4) | 90 | 0 |
| Agent de couplage (5) | 7.5 | 0 |
| Noir de carbone (6) | 4 | 0 |
| Plastifiant liquide 1 (7) | 20 | 0 |
| Plastifiant liquide 2 (8) | 0 | 20 |
| Résine (9) | 20 | 0 |
| Cire anti-ozone | 1.5 | 0 |
| Agent anti-oxydant (10) | 2 | 0 |
| DPG (11) | 1.5 | 0 |
| ZnO (12) | 2.75 | 0 |
| Acide stéarique(13) | 2 | 0 |
| CBS (14) | 2.1 | 0 |
| Soufre | 1.4 | 0 |

| | | |
|---|---|---|
| (1) SBR solution (taux exprimés en SBR sec : 41% de styrène, 24 % des motifs polybutadiène en 1-2 et 51% des motifs polybutadiène en 1-4 trans (Tg = - 25°C) ; (2) SBR solution (taux exprimés en SBR sec : 29% de styrène, 5 % des motifs polybutadiène en 1-2 et 80% des motifs polybutadiène en 1-4 trans (Tg = - 56°C) ; (3) Élastomère thermoplastique SIS « Hybrar 5125 » de la société Kuraray ; (4) Silice (« Zeosil 1165MP » de la société Rhodia) ; (5) agent de couplage TESTP (« Si69 » de la société Degussa) ; (6) Noir de carbone N234 ; (7) Huile TDAE « Vivatec 500 » de la société Hansen & Rosenthal (8) Huile paraffinique « Extensoil 51 24T » de la société Repsol, ou « Tudalen 1968 » de la société Klaus Dahleke ; (9) Résine C5/C9 « CrayValley Wingtack » de la société STS (10) N-1,3-diméthylbutyl-N-phénylparaphénylènediamine (« Santoflex 6-PPD » de la société Flexsys) ; (11) DPG = Diphénylguanidine (« Perkacit DPG » de la société Flexsys) ; (12) oxyde de zinc (grade industriel - société Umicore) ; (13) stéarine (« Pristerene » de la société Uniquema); (14) N-cyclohexyl-2-benzothiazyl-sulfénamide (« Santocure CBS » de la société Flexsys). | | |

Les mesures de coefficient de frottement dynamique ont été réalisées dans des conditions de sol mouillé, à une vitesse de glissement de 0,03 m/s, sous une pression normale de 1 bar et à trois températures (3, 20 et 40°C). Les résultats sont présentés dans le tableau 2.

**Tableau 2**

| | | | |
|---|---|---|---|
| Température (°C) | 3 | 20 | 40 |
| Témoin | 100 | 100 | 100 |
| Feutre MLB25 imprégné | 114 | 134 | 140 |

Les résultats présentés au tableau 2 mettent en évidence que les éprouvettes constituées de feutre de laine imprégné d'un élastomère thermoplastique permettent une amélioration notable de l'adhérence sur sol mouillé. L'amélioration est particulièrement sensible aux températures moyennes et élevées.

## Revendications

1. Bandage pneumatique avec une bande de roulement, **caractérisé en ce que** ladite bande de roulement comporte un feutre imprégné par un matériau élastomère à base d'au moins un élastomère thermoplastique, ledit élastomère thermoplastique étant un copolymère bloc comprenant au moins un bloc élastomère et au moins un bloc thermoplastique, et **en ce que** les fibres dudit feutre sont choisies dans le groupe des fibres textiles, des fibres minérales et de leurs mélanges.

2. Bandage pneumatique selon la revendication 1, dans lequel le feutre imprégné constitue une partie des faces de contact des éléments de sculpture de la bande de roulement.

3. Bandage pneumatique selon l'une quelconque des revendications précédentes, dans lequel le feutre imprégné constitue une partie d'un élément de sculpture de la bande de roulement.

4. Bandage pneumatique selon l'une quelconque des revendications précédentes, dans lequel les fibres du feutre imprégné sont choisies dans le groupe des fibres de soie, de coton, de cellulose, de bambou, de laine et de leurs mélanges.

5. Bandage pneumatique selon la revendication 4, dans laquelle les fibres du feutre imprégné sont des fibres de laine.

6. Bandage pneumatique selon l'une des revendications 1 à 3, dans lequel les fibres du feutre imprégné sont choisies dans le groupe des fibres de polyamide, d'aramide, de carbone, de polyéthylène, de polypropylène, de polyacrylonitrile, de polyimide, de polysulfones, de polyéther sulfones, de polyuréthannes, d'alcool polyvinylique, de polyester, de chlorure de polyvinyle et de leurs mélanges.

7. Bandage pneumatique selon la revendication 6, dans lequel les fibres de polyester du feutre imprégné sont choisies dans le groupe des fibres de polyéthylène téréphtalate (PET), de polybutylène téréphtalate (PBT), de polyéthylène naphtalate (PEN) et de leurs mélanges.

8. Bandage pneumatique selon l'une quelconque des revendications 1 à 3, dans lequel les fibres du feutre imprégné sont des fibres minérales choisies dans le groupe des fibres de verre et de basalte.

9. Bandage pneumatique selon l'une quelconque des revendications précédentes, dans lequel le feutre, avant son imprégnation, a une densité apparente supérieure à 0,10 et de préférence supérieure à 0,15.

10. Bandage pneumatique selon l'une quelconque des revendications précédentes, dans lequel le ou les blocs élastomères du copolymère bloc sont choisis dans le groupe constitué par les élastomères éthyléniques, les élastomères diéniques et leurs mélanges, ayant une température de transition vitreuse inférieure à 25 °C.

11. Bandage pneumatique selon la revendication 10, dans lequel le ou les blocs élastomères du copolymère bloc sont des élastomères diéniques issus de l'isoprène, du butadiène ou d'un mélange de ces derniers.

12. Bandage pneumatique selon l'une quelconque des revendications 10 et 11, dans lequel le ou les blocs thermoplastiques du copolymère bloc sont choisis parmi les polymères ayant une température de transition vitreuse supérieure à 80°C, et, dans le cas d'un bloc thermoplastique semi cristallin, une température de fusion supérieure à 80°C.

13. Bandage pneumatique selon l'une quelconque des revendications 10 à 12, dans lequel le ou les blocs thermoplastiques du copolymère bloc sont choisis dans le groupe constitué par les polyoléfines, les polyuréthannes, les polyamides, les polyesters, les polyacétals, les polyéthers, les polysulfures de phénylène, les polyfluorés, les polystyrènes, les polycarbonates, les polysulfones, le polyméthylméthacrylate, le polyétherimide, les copolymères thermoplastiques et leurs mélanges.

14. Bandage pneumatique selon l'une quelconque des revendications 10 à 13, dans lequel le ou les blocs thermoplastiques du copolymère bloc sont choisis parmi les polystyrènes.

15. Bandage pneumatique selon l'une quelconque des revendications 10 à 14, dans lequel le ou les élastomères thermoplastiques sont choisis dans le groupe constitué par les élastomères thermoplastiques styrène/ butadiène (SB), styrène/ isoprène (SI), styrène/ butadiène/ isoprène (SBI), styrène/ butadiène/ styrène (SBS), styrène/ isoprène/ styrène (SIS), styrène/ butadiène/ isoprène/ styrène (SBIS), styrène/ isobutylène (SIB) linéaire ou étoilé, styrène/ isobutylène/ styrène (SIBS) et les mélanges de ces copolymères.

## Patentansprüche

1. Luftreifen mit einer Lauffläche, **dadurch gekennzeichnet, dass** die Lauffläche einen mit einem Elastomermaterial auf Basis mindestens eines thermoplastischen Elastomers imprägnierten Filz umfasst, wobei es sich bei dem thermoplastischen Elastomer um ein Blockcopolymer mit mindestens einem elastomeren Block und mindestens einem thermoplastischen Block handelt, und dass die Fasern des Filzes aus der Gruppe Textilfasern, Mineralfasern und Mischungen davon ausgewählt sind.

2. Luftreifen nach Anspruch 1, wobei der imprägnierte Filz einen Teil der Kontaktflächen der Profilelemente der Lauffläche bildet.

3. Luftreifen nach einem der vorhergehenden Ansprüche, wobei der imprägnierte Filz einen Teil eines Profilelements der Lauffläche bildet.

4. Luftreifen nach einem der vorhergehenden Ansprüche, bei dem die Fasern des imprägnierten Filzes aus der Gruppe Seidenfasern, Baumwollfasern, Cellulosefasern, Bambusfasern, Wollfasern und Mischungen davon ausgewählt sind.

5. Luftreifen nach Anspruch 4, wobei es sich bei den Fasern des imprägnierten Filzes um Wollfasern handelt.

6. Luftreifen nach einem der Ansprüche 1 bis 3, wobei die Fasern des imprägnierten Filzes aus der Gruppe bestehend aus Polyamidfasern, Aramidfasern, Kohlefasern, Polyethylenfasern, Polypropylenfasern, Polyacrylnitrilfasern, Polyimidfasern, Polysulfonfasern, Polyethersulfonfasern, Polyurethanfasern, Polyvinylalkoholfasern, Polyesterfasern, Polyvinylchloridfasern und Mischungen davon ausgewählt sind.

7. Luftreifen nach Anspruch 6, bei dem die Polyesterfasern des imprägnierten Filzes aus der Gruppe Polyethylenterephthalatfasern (PET-Fasern), Polybutylenterephthalatfasern (PBT-Fasern), Polyethylennaphthalatfasern (PEN-Fasern) und Mischungen davon ausgewählt sind.

8. Luftreifen nach einem der Ansprüche 1 bis 3, wobei es sich bei den Fasern des imprägnierten Filzes um Mineralfasern aus der Gruppe Glasfasern und Basaltfasern handelt.

9. Luftreifen nach einem der vorhergehenden Ansprüche, wobei der Filz vor seiner Imprägnierung eine scheinbare Dichte von mehr als 0,10 und vorzugsweise mehr als 0,15 aufweist.

10. Luftreifen nach einem der vorhergehenden Ansprüche, wobei der elastomere Block beziehungsweise die elastomeren Blöcke des Blockcopolymers aus der Gruppe bestehend aus Ethylen-Elastomeren, Dien-Elastomeren und Mischungen davon mit einer Glasübergangstemperatur von weniger als 25°C ausgewählt ist beziehungsweise sind.

11. Luftreifen nach Anspruch 10, wobei es sich bei dem elastomeren Block beziehungsweise den elastomeren Blöcken des Blockcopolymers um Dien-Elastomere aus Isopren, Butadien oder einer Mischung davon handelt.

12. Luftreifen nach einem der Ansprüche 10 und 11, wobei der thermoplastische Block beziehungsweise die thermoplastischen Blöcke des Blockcopolymers aus Polymeren mit einer Glasübergangstemperatur von mehr als 80°C und im Fall eines teilkristallinen thermoplastischen Blocks einer Schmelztemperatur von mehr als 80°C ausgewählt ist beziehungsweise sind.

13. Luftreifen nach einem der Ansprüche 10 bis 12, wobei der thermoplastische Block beziehungsweise die thermoplastischen Blöcke des Blockcopolymers aus der Gruppe bestehend aus Polyolefinen, Polyurethanen, Polyamiden, Polyestern, Polyacetalen, Polyethern, Polyphenylensulfiden, Polyfluorverbindungen, Polystyrolen, Polycarbonaten, Polysulfonen, Polymethylmethacrylat, Polyetherimid, thermoplastischen Copolymeren und Mischungen davon ausgewählt ist beziehungsweise sind.

14. Luftreifen nach einem der Ansprüche 10 bis 13, wobei der thermoplastische Block beziehungsweise die thermoplastischen Blöcke des Blockcopolymers aus Polystyrolen ausgewählt ist beziehungsweise sind.

15. Luftreifen nach einem der Ansprüche 10 bis 14, wobei das thermoplastische Elastomer beziehungsweise die thermoplastischen Elastomere aus der Gruppe bestehend aus thermoplastischen Styrol/Butadien(SB)-, Styrol/Isopren(SI)-, Styrol/Butadien/Isopren(SBI)-, Styrol/Butadien/Styrol(SBS)-, Styrol/Isopren/Styrol(SIS)-, Styrol/Butadien/Isopren/Styrol (SBIS)-, linearen oder sternverzweigten Styrol/Isobutylen(SIB)-, Styrol/Isobutylen/Styrol(SIBS)-Elastomeren und Mischungen dieser Copolymere ausgewählt ist beziehungsweise sind.

## Claims

1. Tyre with a tread, **characterized in that** the said tread comprises a felt impregnated with an elastomer material based on at least one thermoplastic elastomer, the said thermoplastic elastomer being a block copolymer comprising at least one elastomer block and at least one thermoplastic block, and **in that** the fibres of the said felt are selected from the group of textile fibres, inorganic fibres and their mixtures.

2. Tyre according to Claim 1, in which the impregnated felt constitutes a portion of the contact faces of the tread pattern elements of the tread.

3. Tyre according to any one of the preceding Claims, in which the impregnated felt constitutes a portion of a tread pattern element of the tread.

4. Tyre according to any one of the preceding Claims, in which the fibres of the impregnated felt are selected from the group of silk, cotton, cellulose, bamboo and wool fibres and their mixtures.

5. Tyre according to Claim 4, in which the fibres of the impregnated felt are wool fibres.

6. Tyre according to one of Claims 1 to 3, in which the fibres of the impregnated felt are selected from the group of polyamide, aramid, carbon, polyethylene, polypropylene, polyacrylonitrile, polyimide, polysulphone, polyethersulphone, polyurethane, polyvinyl alcohol, polyester and polyvinyl chloride fibres and their mixtures.

7. Tyre according to Claim 6, in which the polyester fibres of the impregnated felt are selected from the group of polyethylene terephthalate (PET) fibres, polybutylene terephthalate (PBT) fibres, polyethylene naphthalate (PEN) fibres and their mixtures.

8. Tyre according to any one of Claims 1 to 3, in which the fibres of the impregnated felt are inorganic fibres selected from the group of glass fibres and basalt fibres.

9. Tyre according to any one of the preceding Claims, in which the felt, before it is impregnated, has an apparent density of greater than 0.10 and preferably of greater than 0.15.

10. Tyre according to any one of the preceding Claims, in which the elastomer block or blocks of the block copolymer are selected from the group consisting of ethylene elastomers, diene elastomers and their mixtures, having a glass transition temperature of less than 25°C.

11. Tyre according to Claim 10, in which the elastomer block or blocks of the block copolymer are diene elastomers resulting from isoprene, butadiene or a mixture of the latter.

12. Tyre according to any one of Claims 10 and 11, in which the thermoplastic block or blocks of the block copolymer are chosen from polymers having a glass transition temperature of greater than 80°C and, in the case of a semicrystalline thermoplastic block, a melting point of greater than 80°C.

13. Tyre according to any one of Claims 10 to 12, in which the thermoplastic block or blocks of the block copolymer are selected from the group consisting of polyolefins, polyurethanes, polyamides, polyesters, polyacetals, polyethers, polyphenylene sulphides, polyfluorinated compounds, polystyrenes, polycarbonates, polysulphones, polymethyl methacrylate, polyetherimide, thermoplastic copolymers and their mixtures.

14. Tyre according to any one of Claims 10 to 13, in which the thermoplastic block or blocks of the block copolymer are chosen from polystyrenes.

15. Tyre according to any one of Claims 10 to 14, in which the thermoplastic elastomer or elastomers are selected from the group consisting of styrene/butadiene (SB), styrene/isoprene (SI), styrene/butadiene/isoprene (SBI), styrene/butadiene/styrene (SBS), styrene/isoprene/styrene (SIS), styrene/butadiene/isoprene/styrene (SBIS), linear or starbranched styrene/isobutylene (SIB) and styrene/isobutylene/styrene (SIBS) thermoplastic elastomers and the mixtures of these copolymers.
